# EUROPÄISCHE PATENTANMELDUNG

(11) **EP 3 208 036 A1**
(43) Veröffentlichungstag der Anmeldung: **23.08.2017**
(21) Anmeldenummer: 16155902.6
(22) Anmeldetag: 16.02.2016
(51) Int. Cl.: B23Q 11/00, F16F 1/26, F16F 7/10, F16F 7/116

(54) **SCHWINGUNGSDÄMPFUNG EINER WERKZEUGMASCHINE**

(71) Anmelder: Siemens Aktiengesellschaft, 80333 München (DE)
(72) Erfinder: Haschka, Markus Stephan, 90419 Nürnberg (DE); Schäfers, Elmar, 90763 Fürth (DE); Schür, Torsten, 91058 Erlangen (DE); Stoiber, Dietmar, 90763 Fürth (DE)

(57) **Zusammenfassung**

Die Erfindung betrifft eine Werkzeugmaschine (1), aufweisend ein Maschinenelement (10), eine Dämpfermasse (20), Tragblechanordnungen (40) und einen Linearmotor (LM). Um eine Werkzeugmaschine (1) anzugeben, die eine effektive und wartungsarme Schwingungsdämpfung ermöglicht wird vorgeschlagen, die Dämpfermasse (20) mittels der Tragblechanordnungen (40) beweglich zu lagern. Die Tragblechanordnungen (40) weisen jeweils ein Tragblech (41) und Lager (42) auf, wobei das Tragblech (41) in den Lagern (42) eingespannt oder befestigt ist. Weiterhin steht die Dämpfermasse (20) zur Dämpfung von Schwingungen (S) der Werkzeugmaschine (1) mittels des Linearmotors (LM) in Wirkverbindung mit dem Maschinenelement (10) und/oder der Werkzeugmaschine (1).

## Beschreibung

Die Erfindung betrifft eine Werkzeugmaschine, aufweisend ein Maschinenelement, eine Dämpfermasse, Tragblechanordnungen und einen Linearmotor, wobei die Dämpfermasse mittels der Tragblechanordnung beweglich gelagert ist.

Eine derartige Werkzeugmaschine kommt bei vielen Fertigungsprozessen, insbesondere bei spanenden Fertigungsprozessen, zum Einsatz. Die durch den Betrieb der Werkzeugmaschine ausgelösten Schwingungen sind unerwünscht und führen zu einer verringerten Produktivität. Zu diesen unerwünschten Schwingungen zählt unter anderem das sogenannte Rattern.

Aus EP 2 174 748 A1 ist eine Werkzeugmaschine bekannt, die ein Maschinenelement aufweist, das mittels eines ersten Motors in einer Verfahrrichtung über ein Getriebe verfahrbar ist, wobei die Werkzeugmaschine einen zweiten Motor aufweist, mittels dessen eine Kraft in Verfahrrichtung des Maschinenelements auf das Maschinenelement ausübbar ist. Dabei übt der zweite Motor direkt ohne ein zwischen zweitem Motor und Maschinenelement zwischengeschaltetes Getriebe die Kraft auf das Maschinenelement aus, wobei der zweite Motor derart ansteuerbar ist, dass die von ihm erzeugte Kraft in Verfahrrichtung des Maschinenelements verlaufenden Schwingbewegungen des Maschinenelements entgegenwirkt.

Bisher ist die Lagerung einer Dämpfermasse, die zur Aufnahme der Reaktionskräfte eines Dämpfungssystems ausgebildet ist nicht wartungsfrei möglich. Die typischerweise auftretenden Verfahrwege einer Dämpfermasse sind sehr klein. Werden beispielsweise Wälzkörperlagerungen zur Lagerung verwendet sind diese bei Verfahrbewegungen in hoher Zahl und geringer Amplitude schnell verschlissen, weil sich die Wälzkörper im Wesentlichen nur an derselben Stelle bewegen und so keinen Schmierfilm aufbauen können.

Als verschleißfreie Alternative zur Wälzkörperlagerung sind hydrostatische Führungen bekannt. Sie sind gegenüber den kleinen Hubbewegungen dauerfest. Der Nachteil hydrostatischer Führungen ist der hohe Aufwand der Ölversorgung, der mit der vorliegenden Erfindung völlig entfällt.

Aufgabe dieser Erfindung ist es, eine Werkzeugmaschine anzugeben, die eine effektive und wartungsarme Schwingungsdämpfung ermöglicht.

Dazu wird eine Werkzeugmaschine vorgeschlagen, die ein Maschinenelement, eine Dämpfermasse, Tragblechanordnungen und einen Linearmotor aufweist. Dabei ist die Dämpfermasse mittels der Tragblechanordnungen beweglich gelagert, wobei die Tragblechanordnungen jeweils ein Tragblech und Lager aufweisen, wobei das Tragblech in den Lagern eingespannt und/oder befestigt ist. Weiterhin steht die Dämpfermasse zur Dämpfung von Schwingungen der Werkzeugmaschine mittels des Linearmotors in Wirkverbindung mit dem Maschinenelement und/oder der Werkzeugmaschine.

Die Werkzeugmaschine kann dabei beispielsweise eine große spanabhebende Werkzeugmaschine mit einer großen Auskragungslänge sein. Das Maschinenelement ist das zu bedämpfende Teil der Werkzeugmaschine und kann dabei als Maschinentisch ausgeführt sein. Die Dämpfermasse ist zur Dämpfung und Aufnahme der Schwingungen vorgesehen, die durch den Betrieb der Werkzeugmaschine entstehen. Die Tragblechanordnungen bestehen aus einem Tragblech, dass beispielsweise von zwei Lagern gelagert wird. So können zwei Tragblechanordnungen die Dämpfermasse derart beweglich lagern, dass die Tragblechanordnungen wartungsfrei sind und eine ausreichend hohe Beweglichkeit der Dämpfermasse sichergestellt ist. Der Linearmotor dämpft nun aktiv die Schwingungen durch entsprechende Dämpfungsbewegungen die den Bewegungen der Schwingung entgegenwirken.

Dies hat gegenüber bekannten aktiven Dämpfersystemen mit herkömmlichen Lagern den großen Vorteil, dass mindestens die gleiche Dämpfungsleistung erreicht wird und dabei die Aufhängung der Dämpfermasse wartungsarm bis hin zu komplett wartungsfrei ist.

In einer besonders vorteilhaften Ausführungsform sind die Tragbleche jeweils derart in die Lager eingespannt, dass die Tragbleche höchstens eine vernachlässigbar kleine plastische Verformung durch die Bewegung der Dämpfermasse erfahren. Idealerweise ist die Verformung, die die Tragfläche durch die Bewegung der Dämpfermasse erfährt, komplett elastisch. Es obliegt aber dem Ausleger der Tragblechanordnung, kleinste plastische Verformungen zuzulassen, um hier einen Kompromiss aus Wirtschaftlichkeit und Haltbarkeit der Lageranordnung zu erreichen. Ziel sollte es dabei sein, dass die betrieblich auftretenden millionenfachen Biegezyklen ohne Ermüdung des Materials überstanden werden. Vernachlässigbar kleine plastische Verformungen sind also dann vorhanden, wenn unter Berücksichtigung des Anwendungsfalls und der Standzeit einer derartigen Lageranordnung die auftretenden Verformungen keine oder eine tolerierbare Auswirkung auf die Lebensdauer einer solchen Tragblechanordnung hat. Dies hat den besonderen Vorteil, dass die Tragblechanordnung damit annähernd wartungsfrei ist und die Betriebskosten einer solchen Anlage dadurch deutlich sinken.

In einer weiteren Ausführungsform weisen die Lager jeweils einen Klemmbereich und eine Biegekulisse auf. Im Klemmbereich können die Tragbleche festgeklemmt also kraftschlüssig befestigt sein. Es ist aber ebenso denkbar, dass die kraftschlüssige Verbindung noch durch eine formschlüssige Verbindung ergänzt wird. Ebenso ist es denkbar, dass eine Schweißnaht gesetzt wird, also eine materialschlüssige Verbindung zusätzlich zur Verstärkung des Lagers eingebracht wird. Das Tragblech ragt aus dem Klemmbereich in Richtung des gegenüberliegenden Lagers heraus und wird durch die Biegekulisse geführt. Die Biegekulisse ist dabei derart zu gestalten, dass das Tragblech durch die Pendelbewegungen der Dämpfermasse durch die Biegekulisse geführt wird und keine oder nur vernachlässigbar kleine dauerhafte Verformungen annimmt.

In einer weiteren vorteilhaften Ausführungsform weisen die Tragbleche eine Ruhelage auf, wobei der Klemmbereich in einem Winkel bzgl. der Ruhelage angeordnet ist, wobei der Winkel derart gewählt ist, dass bei einer maximal auftretenden Auslenkung der Dämpfermasse kein Vorzeichenwechsel der Biegespannung in den Tragblechen auftritt. Die Ruhelage der Tragbleche soll dabei die Position der Tragbleche sein, die sie einnehmen wenn die Maschine außer Betrieb ist. Die Anziehungskraft des Linearmotors kann dabei berücksichtigt werden. Der Winkel ist vorzugsweise ein spitzer Winkel. Eine derartige Anordnung des Klemmbereichs ermöglicht es, dass Auslenkungen der Tragbleche in beide möglichen Richtungen das Tragblech bzgl. seines Lagers nur in eine Richtung auslenken.

In einer besonders vorteilhaften Ausführungsform weist die Biegekulisse Radien auf, die derart gewählt sind, dass die in den Tragblechen durch den Betrieb der Werkzeugmaschine entstehende Biegespannung die Dauerfestigkeitsspannung der Tragbleche nicht überschreitet. Die Krümmung der Biegekulisse muss nicht zwangsläufig von konstantem Radius sein. Die Radien implizieren damit ebenfalls nicht zwangsläufig, dass die entsprechenden Bereiche auf die Form eines Kreisbogens begrenzt sind. Vielmehr sind die Radien als Auslegungshinweis zu verstehen, die entsprechend den gewählten Fertigungstechnologien umgesetzt werden. Die Form des Kreisbogens ist dabei zu bevorzugen, es ist aber ebenso möglich, die Form des Kreisbogens durch diskrete Annäherung an eine Kreisform zu erreichen. Ziel soll es dabei sein die einzelnen Biegeradien so groß wie konstruktiv möglich zu gestalten, um die Biegespannung in den Tragblechen so klein wie möglich zu halten. Die Biegespannung bezieht sich dabei auf die Biegespannung in den Tragblechen, die durch die Bewegung der Dämpfermasse durch den Betrieb der Werkzeugmaschine und damit durch das Biegen der Tragbleche über die Biegekulisse entstehen. Sind die Biegeradien zu klein gewählt, so wird die Biegespannung zu groß und die Dauerfestigkeitsspannung der Tragbleche kann überschritten werden. Dies würde zu einer vorzeitigen Ermüdung der Tragbleche führen und es könnte keine wartungsarme/- freie Anordnung garantiert werden. Deshalb ist es besonders vorteilhaft, entsprechende Radien vorzusehen, um die Biegespannung dauerhaft unter der Dauerfestigkeitsspannung zu halten. Dies ist beispielsweise der Fall, wenn die Biegespannung unterhalb der Wöhlerlinie für unendliche viele Biegezyklen liegt.

Es ist weiterhin denkbar, dass die Radien der Biegekulisse mit steigendem Abstand zum Klemmbereich kleiner werden. Dies hat den Hintergrund, dass das Tragblech mit steigendem Abstand zum Klemmbereich nur durch immer größer werdende Auslenkungen der Dämpfermasse in Berührung mit dem Schmiegebereich kommt. Legt man das Dämpfungssystem insgesamt so aus, dass derart große Auslenkungen nur mit geringer Wahrscheinlichkeit auftreten, so lässt sich durch die beschriebene Abnahme des Radius der Biegekulisse das Lager insgesamt kompakter gestalten, da kleinere Radien mit entsprechender Ersparnis von Bauraum einhergehen.

In einer weiteren Ausführungsform sind die Radien der Biegekulisse größer, insbesondere um einen Faktor 30 - 100-mal größer, gewählt als die maximal auftretende Auslenkung der Dämpfermasse. Sind die Radien der Biegekulisse deutlich größer als die maximal auftretende Auslenkung der Dämpfermasse im Betrieb der Werkzeugmaschine, so ist dies besonders schonend für die Tragbleche. So kann auf einfache Art und Weise sichergestellt werden, dass es zu keiner unerwünschten Ermüdung in den Tragblechen kommt.

In einer weiteren Ausführungsform ist die Biegekulisse durch einen mit der Bewegung der Tragbleche beweglichen Ablösepunkt in einen Schmiegebereich und einen Ablösebereich aufgeteilt. Wird nun ein Schmiegebereich vorgesehen, so schmiegt sich das Tragblech bei Auslenkung an diesen Schmiegebereich. Der Schmiegebereich grenzt über einen Ablösepunkt an den Ablösebereich. Der Ablösebereich ist dann der Bereich, in dem sich das Tragblech von der Biegekulisse ablöst. Dabei ist zu beachten, dass sich der Ablösepunkt mit der Auslenkung der Dämpfermasse in seiner Position verändert. Der Ablösepunkt ist dabei bei der größten anzunehmenden Auslenkung stets innerhalb der Biegekulisse. Dies führt vorteilhaft dazu, dass auch bei dieser größten anzunehmenden Auslenkung das Tragblech nicht über den Rand der Biegekulisse gebogen wird und so keine zu hohen Spannungen im Tragblech auftreten. So ist konstruktiv festgelegt, dass die Tragblechanordnung eine entsprechend hohe Standzeit hat.

In einer weiteren Ausführungsform weist der Schmiegebereich einen Radius auf, der größer ist als ein Radius des Ablösebereichs. Hat nun der Schmiegebereich einen Radius, der größer ist als der Radius des Ablösebereichs, so wird die zuvor beschriebene Wirkung des Ablöse- und des Schmiegebereichs noch verstärkt und ein unerwünschtes Biegen der Tragbleche über die Lager hinaus wird konstruktiv weiter erschwert. Dabei ist zu beachten, dass sich der Ablösepunkt mit der Auslenkung der Dämpfermasse in seiner Position verändert. Es ist denkbar, dass der bei der größten Auslenkung auftretende größtmögliche Schmiegebereich einen größeren Radius als der Ablösebereich aufweist. Auf diese Art und Weise können auch für nicht vorhergesehene Auslenkungen der Dämpfermasse noch Reserven geschaffen werden. Durch den kleineren Radius im Ablösebereich entstehen zwar so verhältnismäßig höhere Biegespannungen, die aber toleriert werden können, da statistisch die Tragbleche sich nur selten an diesen Bereich schmiegen. Konstruktiv kann die statistische Verteilung der Häufigkeit des Anschmiegens an einen bestimmten Bereich durch Anpassen der Lager an die im Betrieb auftretenden Auslenkungen der Tragbleche beeinflusst werden.

In einer weiteren Ausführungsform liegt die Eigenfrequenz der mittels der Tragblechanordnung beweglich gelagerten Dämpfermasse zwischen 1 und 50 Hz, insbesondere zwischen 2 und 20 Hz. Die Dämpfermasse bildet mit den Tragblechanordnungen ein schwingfähiges System. Am ehesten kann dieses System als Pendel beschrieben werden. Mit Eigenfrequenz ist hier die Eigenfrequenz dieses pendelähnlichen Systems gemeint. Weiterhin können auch die Federsteifigkeit der Tragbleche und die Pendelhubbewegung, die die Dämpfermasse bei entsprechender Anordnung entgegen der Anzugskraft des Linearmotors ausführt, Einfluss auf die Eigenfrequenz der Dämpfermasse mit den Tragblechanordnungen nehmen. Maßgeblich für die Eigenfrequenz ist die Länge der Tragbleche. Zu beachten ist hier die freie Länge der Tragbleche, die tatsächlich die Pendelbewegung ausführt, unter Berücksichtigung der Teile der Tragbleche, die in die Lager eingespannt sind.

In einer weiteren Ausführungsform beträgt die Eigenfrequenz der mittels der Tragblechanordnung beweglich gelagerten Dämpfermasse höchstens 25% der Frequenzen, mit denen der Linearmotor den Schwingungen entgegenwirkt. Ist dies der Fall, so wird die Tragblechanordnung mit der daran beweglich gelagerten Dämpfermasse nicht oder kaum durch die Bewegungen des Linearmotors angeregt. Eine Anregung der Dämpfermasse in ihrem Eigenfrequenzbereich wird so vermieden.

In einer weiteren Ausführungsform ist die Dämpfermasse mittels der Tragblechanordnung am Maschinenelement befestigt. Dies hat den Vorteil, dass die Dämpfermasse entsprechend in die Werkzeugmaschine und/oder das Maschinenelement integriert werden kann.

In einer besonders vorteilhaften Ausführungsform weist der Linearmotor einen aktiven Teil und einen passiven Teil auf, wobei der passive Teil des Linearmotors an der Dämpfermasse befestigt ist. An dieser Stelle ist zu erwähnen, dass die Anziehungskraft zwischen dem aktiven Teil und dem passiven Teil des Linearmotors enorm hoch ist und die Gewichtskraft einer Dämpfermasse deutlich übersteigt. Daher ist zu beachten, dass die Tragbleche in erster Linie auf diese Anziehungskraft auszulegen sind. Besonders vorteilhaft ist hier, dass die Tragblechanordnungen besonders einfach auf derart hohe Kräfte ausgelegt werden können. Mit der Stärke des Tragblechs steigt auch dessen Belastungsfähigkeit. Mit aktivem Teil wird der Teil bezeichnet, der eine Stromversorgung benötigt. Dies ist im Regelfall der Stator der beim Linearmotor nicht kreisförmig ist, sondern sich linear erstreckt. Mit dem passiven Teil soll im Folgenden beispielsweise ein permanentmagnetischer Teil des Linearmotors bezeichnet sein, der hier vorteilhaft an der Dämpfermasse befestigt ist, was ein aufwändiges elektrisches Kontaktieren von der Werkzeugmaschine hin zu der beweglichen Dämpfermasse entfallen lässt. Dieser Aufbau ist besonders effizient.

In einer weiteren Ausführungsform ist der aktive Teil des Linearmotors am Maschinenelement befestigt. Dies ist insbesondere deshalb von Vorteil, weil die am Maschinenelement auftretenden Schwingungen so direkt durch den Linearmotor gedämpft werden können. Vorhandene Anschlüsse am Maschinenelement können ebenfalls für den Linearmotor verwendet werden.

In einer weiteren Ausführungsform weist die Werkzeugmaschine einen zweiten Linearmotor auf, wobei der zweite Linearmotor derart angeordnet ist, dass die Dämpfermasse zwischen den beiden Linearmotoren angeordnet ist. Mit dieser Anordnung lassen sich vorteilhaft mehrere Schwingungsformen überlagern und die Freiheitsgrade der Dämpfung deutlich erhöhen. Berücksichtigt man nun die Anziehungskräfte in den Luftspalten der beiden Linearmotoren, so kann es sich als vorteilhaft erweisen den Luftspalt des zweiten Linearmotors vom Luftspalt des Linearmotors unterschiedlich zu wählen. Ebenso ist denkbar, dass die Linearmotoren andere Dimensionen aufweisen. Der Vorteil der sich aus unterschiedlichen Luftspalten bzw. Dimensionen ergibt, ist, dass die Dämpfermasse so immer noch eine Differenz-Anziehungskraft der beiden Linearmotoren erfährt und diese sich nicht gegenseitig aufheben. Damit ist es möglich eine Ausreichende Kraft in die nötige Richtung auf die Dämpfermasse und damit die Lageranordnungen auszuüben um eine mechanische Stabilität der Anordnung zu erreichen. Die Kombination aus einem oder mehreren Linearmotoren mit den Tragblechanordnungen und der Dämpfermasse ist also vorteilhaft und vielseitig einsetzbar.

Wird die Dämpfermasse und/oder das Maschinenelement mit einem Positions- oder Geschwindigkeits-Messsystem ausgerüstet, besteht die Möglichkeit, die notwendige Motordämpfung durch die Regelung des Linearmotors elektrisch zu erzeugen. Das Messsystem kann dabei beispielsweise die Position / Geschwindigkeit von Dämpfermasse und/oder Maschinenelement relativ zueinander oder relativ zu weiteren feststehenden Teilen erfassen. Umrichter zur Ansteuerung eines Linearmotors verfügen oftmals über Geschwindigkeitsregler. Er prägt eine Antriebskraft in den Linearmotor ein, deren Größe proportional zur Geschwindigkeit ist und der Geschwindigkeitsrichtung entgegen zeigt. Die elektrische Erzeugung der Motordämpfung hat den Vorzug, dass sie mittels Parametrierung der Regelungsparameter einstellbar ist. Daneben besteht die weitere Möglichkeit, die notwendige Motordämpfung durch Wirbelstrom zu erzeugen. Dazu könnte die Dämpfermasse mit einem weiteren permanentmagnetisch erregten passiven Teil bestückt werden. Diesem passiven Teil wird ein eigenes aktives Teil gegenübergesetzt, das kurzgeschlossen wird. Ein kurzgeschlossenes aktives Teil eines Linearmotors wirkt gegenüber einem bewegten passiven Teil wie ein Dämpfer.

Im Folgenden wird die Erfindung anhand der in den Figuren dargestellten Ausführungsbeispiele näher beschrieben und erläutert. Es zeigen:
- FIG 1: eine schematische Darstellung einer mittels zweiter Tragblechanordnungen gelagerten Dämpfermasse,
- FIG 2: eine Tragblechanordnungen im Detail,
- FIG 3: eines der Lager in einer detaillierten Darstellung,
- FIG 4: eine weitere Ausführungsform eines Lagers,
- FIG 5: die Ausführungsform des Lagers aus FIG 4 in einer weiteren Darstellung und
- FIG 6-9: verschiedene Anordnungsmöglichkeiten der Dämpfermasse, der Tragblechanordnungen und der Linearmotoren in oder an einer Werkzeugmaschine.

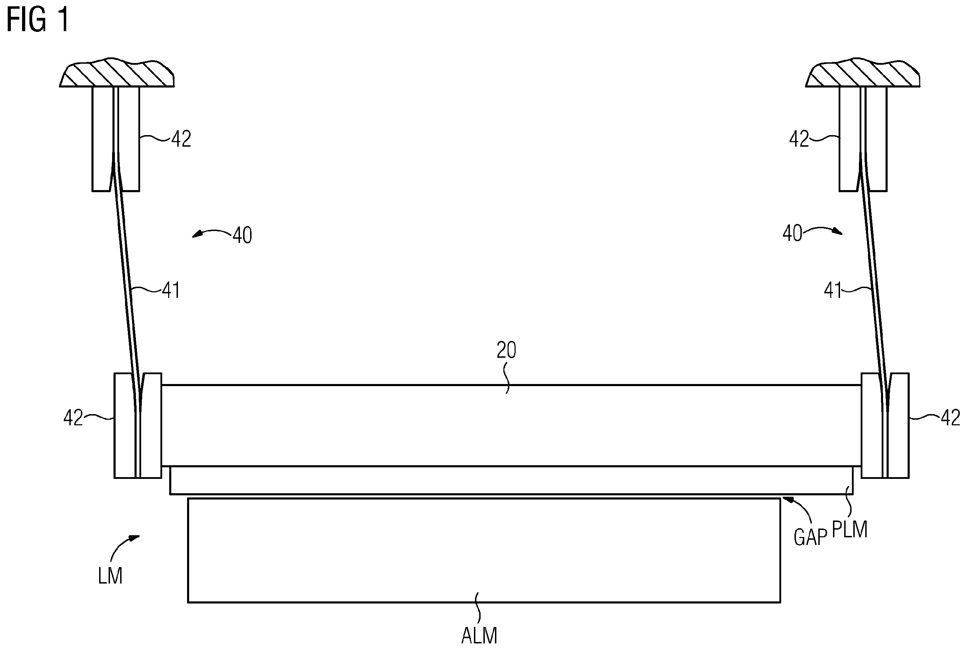

FIG 1 zeigt eine schematische Darstellung einer Dämpfermasse 20, die mittels zweiter Tragblechanordnungen 40 gelagert ist. Dabei ist die Dämpfermasse 20 so gelagert, dass sie eine Pendelbewegung ausführen kann. Die Tragblechanordnungen 40 bestehen dabei jeweils aus zwei Lagern 42 und einem Tragblech 41, das an dessen Enden in den Lagern 42 eingespannt ist und damit die Pendelbewegung ermöglicht. Die Befestigung der Tragbleche 41 in den Lagern 42 kann selbstverständlich neben einer Klemm- und/oder Schraubverbindung auch als stoff- oder weitere formschlüssige Verbindung ausgeführt sein. Die Anordnung zweier gleichwertiger Lager 42 an einem Tragblech 41 ist nicht zwingend notwendig. Ebenfalls denkbar wäre die Verwendung nur eines Lagers 42 und einer weiteren andersartigen Lagervorrichtung. Auch ist denkbar, dass jedes der Lager 42 über die gesamte Breite eines Tragblechs 41, in FIG 1 also in die Bildebene hinein, als mehrere einzelne Lagereinheiten ausgebildet ist. Weiterhin zu sehen ist ein Linearmotor LM mit jeweils einem aktiven Teil ALM und einem passiven Teil PLM. Der aktive Teil ALM und der passive Teil PLM sind durch einen Luftspalt GAP voneinander getrennt. Im Luftspalt GAP herrscht eine hohe Anziehungskraft zwischen dem aktiven Teil ALM und dem passiven Teil PLM. Die Tragblechanordnungen 40 sind durch ihren besonderen Aufbau besonders gut geeignet um diese hohen Anziehungskräfte von beispielsweise 8000 N zu Lagern und dabei trotzdem ein wartungsfreies Schwingen der Dämpfermasse zu ermöglichen. Der passive Teil PLM des Linearmotors LM ist an der Dämpfermasse 20 befestigt. Der passive Teil PLM des Linearmotors LM kann dabei als Magnetanordnung ausgebildet sein, wobei dazu Permanentmagnete im passiven Teil PLM angeordnet sind. Im Betrieb durchsetzt der aktive Teil ALM den passiven Teil PLM mit einem entsprechend variablen Magnetfeld. Die dadurch entstehenden Kräfte werden schließlich zur Dämpfung von Schwingungen der Werkzeugmaschine genutzt. Dies hat den Vorteil, dass an der beweglichen Dämpfermasse 20, zumindest für den passiven Teil PLM des Linearmotors LM keine elektrischen Verbindungen notwendig sind, was zu einer starken Vereinfachung des Gesamtsystems führt. Mittels des aktiven Teils ALM des Linearmotors LM kann die gewünschte Dämpfungskraft auf die Werkzeugmaschine 1 ausgeübt werden. Da Kräfte immer paarweise in entgegengesetzten Richtungen auftreten, wird die nicht zur Dämpfung der Werkzeugmaschine 1 benötigte Kraft in der Dämpfermasse 20 wirksam. Wegen der beweglichen Aufhängung in den Tragblechanordnungen 40 kann die Dämpfermasse 20 diese Kraft nahezu ungehindert in eine Eigenbewegung umsetzen, ohne dass diese Eigenbewegung auf die Werkzeugmaschine 1 zurück wirken würde.

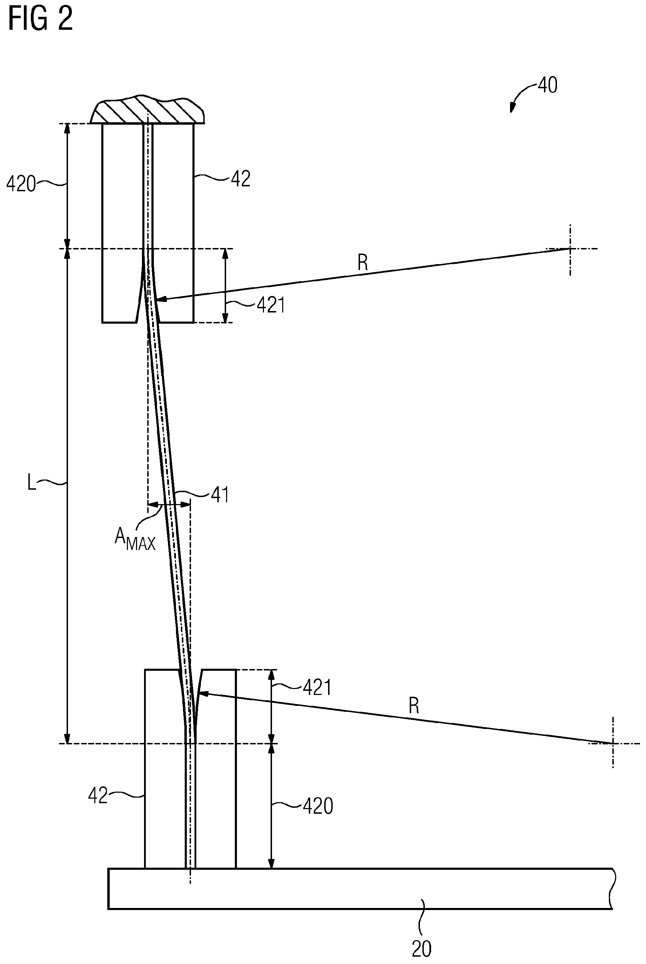

FIG 2 zeigt eine der Tragblechanordnungen 40 im Detail. Die entsprechenden Bezugszeichen werden analog zu FIG 1 verwendet. Ein Teil der Dämpfermasse 20 ist am unteren Lager 42 befestigt, das über das Tragblech 41 mit einem befestigten Lager 42 verbunden ist. Weiterhin ist das untere der beiden Lager 42 um eine Auslenkung Amax ausgelenkt. Diese Auslenkung Amax soll die maximale Auslenkung darstellen, die im Betrieb der Dämpfermasse 20 auftritt. Weiterhin ist zu sehen, dass die Lager 42 jeweils einen Klemmbereich 420 sowie eine Biegekulisse 421 aufweisen. Der Klemmbereich 420 ist dabei als der Bereich zu verstehen, in dem das Tragblech 41 befestigt ist. Dies kann nicht nur durch Klemmen sondern auch durch weitere bekannte Befestigungsmaßnahmen oder deren Kombinationen geschehen. Die Biegekulisse 421 ist der Bereich des Lagers 42, in dem sich das Tragblech 41 biegen kann und damit überhaupt erst die Bewegung der Dämpfermasse 20 ermöglicht wird. Weiterhin eingezeichnet ist die freie Länge L, die die tatsächliche schwingende Länge darstellt und damit Einfluss auf die Eigenfrequenz der Anordnung hat. Die eingezeichneten Radien R sollen die Krümmung der Biegekulisse 421 darstellen. Mit dieser Krümmung kann durch die Konstruktion der Lager 42 gesteuert werden, dass das Tragblech 41 sich nicht außerhalb vorgebbarer Anforderungen verformt. Bei diesen vorgebbaren Anforderungen kann es sich beispielsweise um maximale Biegespannungen handeln, die durch den Biegeradius entstehen können. Hier ist es insbesondere wünschenswert, dass die Spannungen, die im Tragblech 41 auftreten, unterhalb der Dauerfestigkeitsspannung des Tragbleches 41 bleiben.

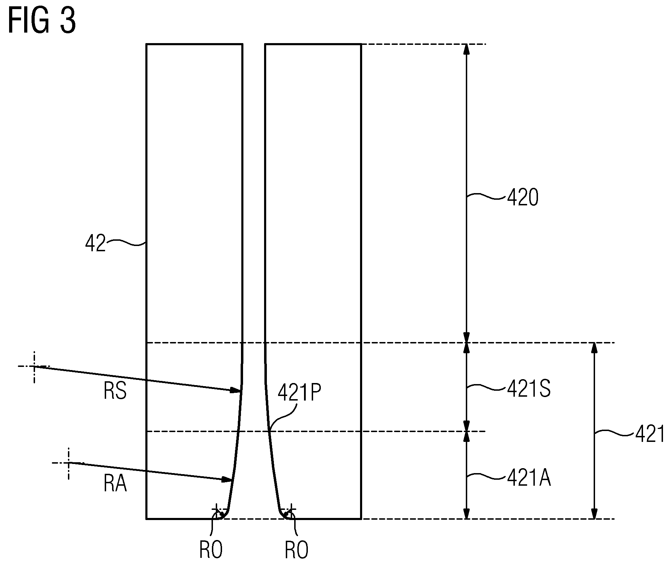

FIG 3 zeigt eines der Lager 42 in einer detaillierteren Darstellung. Dabei ist unter Beibehaltung der Bezugszeichen aus FIG 2 der Klemmbereich 420 sowie die Biegekulisse 421 zu sehen. Ein Tragblech 41 ist der Übersichtlichkeit halber nicht gezeigt. Die Biegekulisse 421 ist dabei in einen Schmiegebereich 421S und einen Ablösebereich 421A aufgeteilt. Der Schmiegebereich 421S wird vom Ablösebereich 421A durch den Ablösepunkt 421P getrennt. Der Ablösepunkt 421P ist der Punkt, bis zu dem sich das Tragblech 41 an die Biegekulisse 421 schmiegt und ab dem sich das Tragblech 41 von der Biegekulisse 421 ablöst, jeweils vom Klemmbereich 420 aus betrachtet. Dabei ist zu beachten, dass der Ablösepunkt 421P mit der Auslenkung des Tragblechs 41 entlang der Biegekulisse 421 wandert. Der Schmiegebereich 421S weist einen Radius RS und der Ablösebereich 421A einen Radius RA auf.

Mit der Annahme, dass der in FIG3 dargestellte Schmiegebereich 421S der im regulären Betrieb der Werkzeugmaschine maximal auftretende Schmiegebereich ist und damit der Ablösepunkt 421P der vom Klemmbereich 420 am weitesten entfernte Ablösepunkt 421P ist, so lassen sich folgende Auslegungshinweise für die Radien RS, RA angeben. Die auftretenden Radien RS im Schmiegebereich 421S sind größer als die auftretenden Radien RA im Ablösebereich 421A. Dies hat den Hintergrund, dass der maximale Schmiegebereich 421S nur in Ausnahmefällen verlassen wird und so der minimale Ablösebereich einen kleineren Radius aufweisen kann.

Die Bereiche 421P, 421S sowie die Radien RA und RS sind dabei nicht maßstabsgetreu und abhängig von der jeweiligen Auslegung. Es ist denkbar, dass der minimale Ablösebereich 421A, der bei der maximalen Auslenkung auftritt direkt in den Radius RO übergeht um ein noch kompakteres Lager 42 zu erhalten. Ebenso ist denkbar, dass mit sinkender Häufigkeit des Kontakts des Tragblechs 41 mit einem bestimmten Ablösepunkt 421P auch innerhalb des maximalen Schmiegebereichs 421S bereits eine Reduzierung des Radius stattfindet, da die Belastung des Tragblechs 41 trotz kleinerem Biegeradius durch die geringere Häufigkeit nicht erhöht wird.

In FIG 3 ist das Lager 42 symmetrisch bzgl. des aufzunehmenden aber nicht dargestellten Tragblechs 41 aufgebaut, deshalb sind die Bezugszeichen jeweils für die linke und die rechte Seite der Übersichtlichkeit halber nur einmalig eingezeichnet. Insbesondere die Radien RS, RA treten beidseitig auf. Es ist aber ebenso denkbar, dass die Radien RS, RA je nach Belastung von Seite zu Seite unterschiedlich gewählt sind. Weiterhin ist in FIG 3 ein Radius RO zu sehen, der beidseitig an der Lageröffnung angebracht ist. Dieser deutlich kleinere Radius ist lediglich für den Fall vorgesehen, dass das Tragblech 41 unter extremer Auslenkung über den Rand der Biegekulisse 421 hinweg gebogen wird. Dieser Fall ist als so selten anzusehen, dass der Radius RO nur für eine geringe Anzahl an Biegungen des Tragblechs 41 über den Radius RO auszulegen ist.

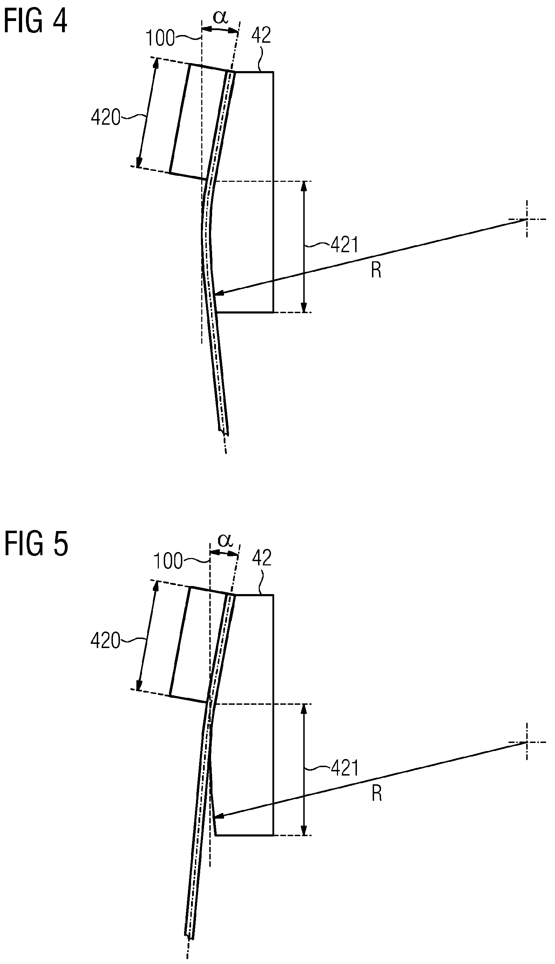

FIG 4 zeigt eine weitere Ausführungsform eines Lagers 42 mit einem Klemmbereich 420 und einer Biegekulisse 421, der in einem Winkel α auf einer Ruhelage 100 des Tragblechs 41 steht. Die Biegekulisse 421 weist einen Radius R auf, der zur Reduzierung der Biegespannungen im Tragblech 41 ausgebildet ist. Die Ruhelage 100 beschreibt dabei die Lage, die die Tragbleche im ruhenden Zustand der Werkzeugmaschine einnehmen. In dieser Ausführungsform ist das Tragblech in der Ruhelage nicht gerade sondern teilweise über die Biegekulisse 421 gebogen. Das Tragblech 41 ist in FIG4 nach rechts ausgelenkt.

FIG 5 zeigt das Lager 42 aus FIG 4 unter Beibehaltung der Bezugszeichen. Dabei ist das Tragblech 41 nach links ausgelenkt und es ist eindeutig zu sehen, dass sich die Richtung der Biegung dabei nicht geändert hat, sondern lediglich die Amplitude der Auslenkung. Dies führt vorteilhaft dazu, dass die Biegespannung im Tragblech 41 keine Vorzeichenwechsel durchführt. Das Lager 42 gemäß FIG4 und FIG5 ist vorzugsweise so auszulegen, dass die maximale Auslenkung, die das Tragblech 41 ausführen kann, höchstens zu einem Rückgang der Biegespannung auf null führt, nicht aber einen Vorzeichenwechsel verursacht.

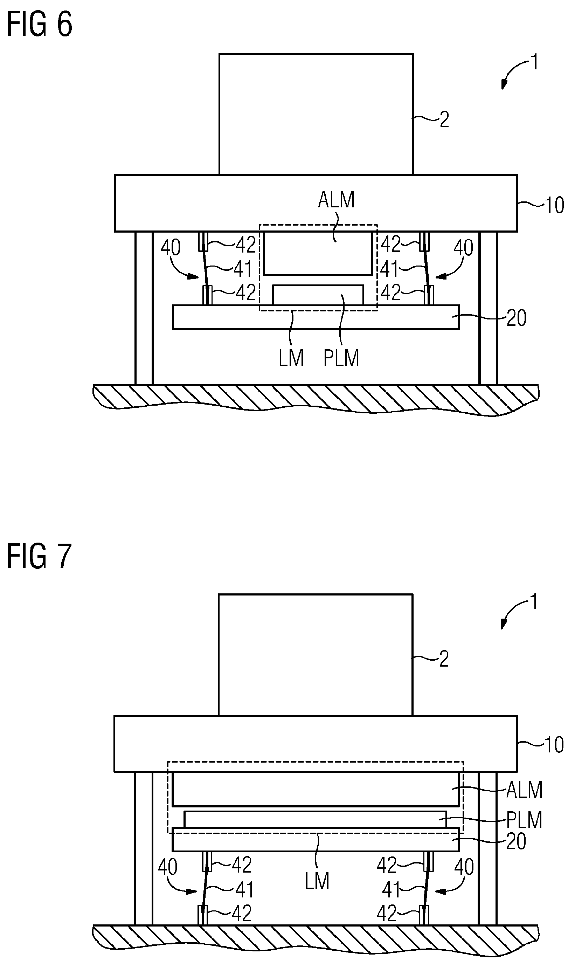

FIG 6 zeigt eine mögliche Ausführungsform einer Werkzeugmaschine 1, die eine Aktorik 2, ein Maschinenelement 10 und eine Dämpfermasse 20 aufweist. Die Aktorik 2 kann beispielsweise als hochdynamisches und damit Schwingungen verursachendes spanabhebendes Werkzeug ausgebildet sein. Das Maschinenelement 10 ist in diesem Fall als eine Art Tisch ausgebildet, es sind aber jegliche weitere Ausführungsformen denkbar, an denen eine Schwingungsdämpfung wünschenswert ist. Die Dämpfermasse 20 ist mittels Tragblechanordnungen 40 am Maschinenelement 10 befestigt. Die Tragblechanordnungen 40 weisen jeweils ein Tragblech 41 sowie zwei Lager 42 auf. Weiterhin zu sehen ist ein Linearmotor LM, dessen passiver Teil PLM an der beweglichen Dämpfermasse 20 befestigt ist und dessen aktiver Teil ALM am Maschinenelement 10 zur Dämpfung der dort auftretenden Schwingungen befestigt ist. Die Anordnung hat den Vorteil, dass die komplette Dämpfermasse inklusive der Aktorik, also dem Linearmotor LM, am oder sogar je nach Bauform in das Maschinenelement 10 integriert werden kann. Dies ist platzsparend und effizient möglich.

FIG 7 zeigt unter Beibehaltung der Bezugszeichen auf FIG 6 eine mögliche Ausführungsform, in der die Dämpfermasse 20 nicht aufgehängt ist sondern auf den Tragblechanordnungen 40 gelagert ist. An sich wäre diese Anordnung ein instabiles System, da jede Auslenkung der Dämpfermasse 20 dazu führen würde, dass die Dämpfermasse 20, der Gewichtskraft folgend, zu Boden fallen würde. Da aber die Anziehungskraft zwischen dem aktiven Teil ALM und dem passiven Teil PLM des Linearmotors LM um viele Größenordnungen größer ist als die Gewichtskraft der Dämpfermasse 20, ist eine derartige Anordnung möglich. Dies hat den großen Vorteil, dass die Dämpfermasse 20 noch zusätzlich von dem Maschinenelement 10 entkoppelt ist und sich hier eventuell auftretende Schwingungen nicht auf das Maschinenelement 10 übertragen. Anstatt die Tragblechanordnungen 40 mittels der Lager 42 am Boden zu befestigen ist es auch denkbar, sie mittels eines Hilfsrahmens an der Werkzeugmaschine 1 zu befestigen. Das hätte den Vorteil, dass die Werkzeugmaschine 1 keine Komponenten am Boden benötigt und damit transportabel bleibt.

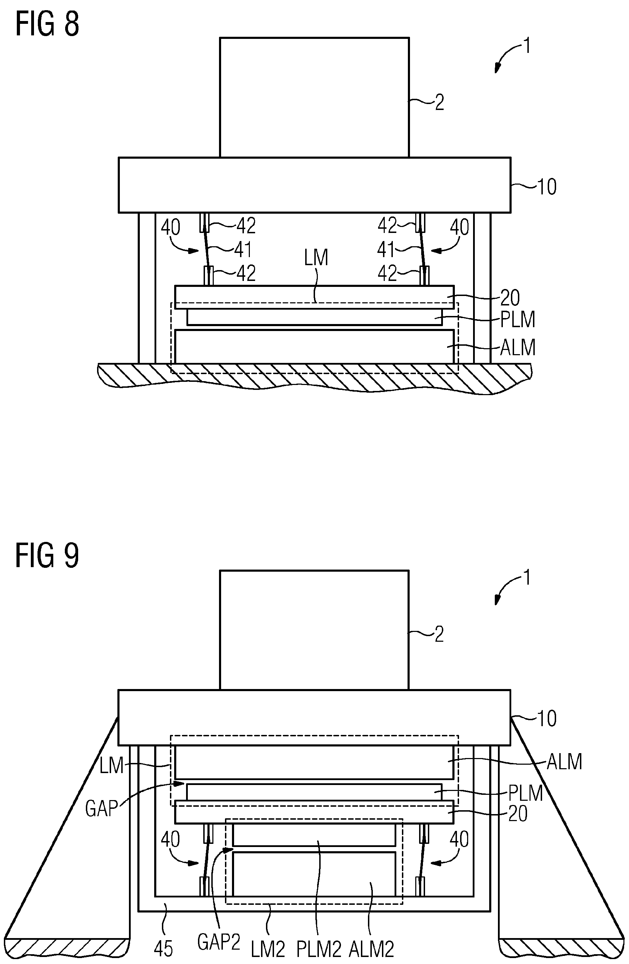

FIG 8 zeigt unter Beibehaltung der Bezugszeichen aus den FIG 6 und 7 eine Werkzeugmaschine 1, deren Dämpfermasse 20 am Maschinenelement 10 mittels der Tragblechanordnungen 40 beweglich befestigt ist. Der passive Teil PLM des Linearmotors LM ist weiterhin an der Dämpfermasse 20 befestigt, der aktive Teil ALM des Linearmotors LM hingegen ist bodenseitig befestigt und kann so Kräfte auf die Dämpfermasse 20 ausüben, ohne Kräfte auf das Maschinenelement 10 auszuüben. Dies kann in gewissen Anwendungsfällen ebenfalls von Vorteil sein.

FIG 9 zeigt unter Beibehaltung der Bezugszeichen aus FIG 6 bis 8 eine Erweiterung des bekannten Systems um einen zweiten Linearmotor LM2. Ein passiver Teil PLM2 des zweiten Linearmotors LM2 ist dabei ebenso an der beweglichen Dämpfermasse 20 befestigt, ein aktiver Teil ALM2 des zweiten Linearmotors LM2 ist an einem Hilfsrahmen 45 befestigt. Zwischen dem aktiven Teil ALM2 und dem passivem Teil PLM2 befindet sich ein zweiter Luftspalt GAP2. Hierbei ist konstruktiv zu beachten, dass die Anziehungskraft der beiden Motoren sich nicht gegenseitig aufhebt und die Dämpfermasse 20 somit in einem undefinierten Zustand schweben würde. Dies kann beispielsweise dadurch verhindert werden, indem der Luftspalt GAP des Linearmotors LM kleiner gewählt wird als der Luftspalt GAP2 des zweiten Linearmotors LM2. Dies hat den Hintergrund, dass die Anziehungskraft, die zwischen den jeweiligen Teilen ALM, PLM, ALM2, PLM2 der Linearmotoren LM, LM2 mit steigendem Abstand zwischen den beiden Teilen sinkt. Somit wäre in dieser Konstellation garantiert, dass die Dämpfermasse 20 immer eine ausreichende Kraft nach oben, also entgegengesetzt der Lager 42, erfährt, was zur Stabilität des Systems beiträgt. Alternativ kann anstatt der Luftspalte GAP, GAP2 auch ein entsprechend schwächer ausgelegter Linearmotor gewählt werden. Um die Kraft des zweiten Linearmotors LM2 für die Dämpfung der Werkzeugmaschine 1 nutzbar zu machen, sollte der aktive Teil ALM2 des zweiten Linearmotors LM2 nicht am Boden befestigt sein, sondern muss seinen Kraftfluss in die Werkzeugmaschine 1 einleiten. Das wird beispielsweise dadurch erreicht, in dem nicht nur die Tragblechanordnungen 40, sondern auch der aktive Teil ALM2 des zweiten Linearmotors LM2 am Hilfsrahmen 45 befestigt sind (siehe obige Skizze). Der Hilfsrahmen 45 muss dann entsprechend steif ausgeführt sein, damit die Kräfte auch in die Werkzeugmaschine 1 geleitet werden können.

Die Erfindung betrifft eine Werkzeugmaschine 1, aufweisend ein Maschinenelement 10, eine Dämpfermasse 20, Tragblechanordnungen 40 und einen Linearmotor LM. Um eine Werkzeugmaschine 1 anzugeben, die eine effektive und wartungsarme Schwingungsdämpfung ermöglicht wird vorgeschlagen, die Dämpfermasse 20 mittels der Tragblechanordnungen 40 beweglich zu lagern. Die Tragblechanordnungen 40 weisen jeweils ein Tragblech 41 und Lager 42 auf, wobei das Tragblech 41 in den Lagern 42 eingespannt oder befestigt ist. Weiterhin steht die Dämpfermasse 20 zur Dämpfung von Schwingungen S der Werkzeugmaschine 1 mittels des Linearmotors LM in Wirkverbindung mit dem Maschinenelement 10 und/oder der Werkzeugmaschine 1.

## Patentansprüche

1. Werkzeugmaschine (1), aufweisend ein Maschinenelement (10), eine Dämpfermasse (20), Tragblechanordnungen (40) und einen Linearmotor (LM),
wobei die Dämpfermasse (20) mittels der Tragblechanordnungen (40) beweglich gelagert ist, wobei die Tragblechanordnungen (40) jeweils ein Tragblech (41) und Lager (42) aufweisen,
wobei das Tragblech (41) in den Lagern (42) eingespannt oder befestigt ist und wobei die Dämpfermasse (20) zur Dämpfung von Schwingungen (S) der Werkzeugmaschine (1) mittels des Linearmotors (LM) in Wirkverbindung mit dem Maschinenelement (10) und/oder der Werkzeugmaschine (1) steht.

2. Werkzeugmaschine (1) nach Anspruch 1, wobei die Tragbleche (41) jeweils derart in die Lager (42) eingespannt sind, dass die Tragbleche (41) höchstens eine vernachlässigbar kleine plastische Verformung durch die Bewegung der Dämpfermasse (20) erfahren.

3. Werkzeugmaschine (1) nach Anspruch 1 oder 2, wobei die Lager (42) jeweils einen Klemmbereich (420) und eine Biegekulisse (421) aufweisen.

4. Werkzeugmaschine (1) nach Anspruch 3, wobei die Tragbleche (41) eine Ruhelage (100) aufweisen, wobei der Klemmbereich (420) in einem Winkel (α) bzgl. der Ruhelage (100) angeordnet ist und wobei der Winkel (α) derart gewählt ist, dass bei einer maximal auftretenden Auslenkung (Amax) der Dämpfermasse (20) kein Vorzeichenwechsel der Biegespannung in den Tragblechen (42) auftritt.

5. Werkzeugmaschine (1) nach Anspruch 3 oder 4, wobei die Biegekulisse (421) Radien (R, RA, RS) aufweist, die derart gewählt sind, dass die in den Tragblechen (41) durch den Betrieb der Werkzeugmaschine (1) entstehende Biegespannung die Dauerfestigkeitsspannung der Tragbleche (41) nicht überschreitet.

6. Werkzeugmaschine (1) nach Anspruch 3, 4 oder 5, wobei die Radien (R, RA, RS) der Biegekulisse (421) größer, insbesondere um einen Faktor 30 - 100-mal größer, gewählt sind als die maximal auftretende Auslenkung (Amax) der Dämpfermasse (20).

7. Werkzeugmaschine (1) nach einem der Ansprüche 3 bis 6,
wobei die Biegekulisse (421) durch einen mit der Bewegung der Tragbleche (41) beweglichen Ablösepunkt (421P) in einen Schmiegebereich (421S) und einen Ablösebereich (421A) aufgeteilt ist.

8. Werkzeugmaschine (1) nach Anspruch 7, wobei der Schmiegebereich (421S) einen Radius (RS) aufweist, der größer ist als ein Radius (RA) des Ablösebereichs (421A).

9. Werkzeugmaschine (1) nach einem der vorhergehenden Ansprüche, wobei die Eigenfrequenz der mittels der Tragblechanordnung (40) beweglich gelagerten Dämpfermasse (20) zwischen 1 und 50 Hz, insbesondere zwischen 2 und 20 Hz, liegt.

10. Werkzeugmaschine (1) nach einem der vorhergehenden Ansprüche, wobei die Eigenfrequenz der mittels der Tragblechanordnung (40) beweglich gelagerten Dämpfermasse (20) höchstens 25% der Frequenzen, mit denen der Linearmotor (LM) den Schwingungen (S) entgegenwirkt, beträgt.

11. Werkzeugmaschine (1) nach einem der vorhergehenden Ansprüche, wobei die Dämpfermasse (20) mittels der Tragblechanordnung (40) am Maschinenelement (10) befestigt ist.

12. Werkzeugmaschine (1) nach einem der vorhergehenden Ansprüche, wobei der Linearmotor (LM) einen aktiven Teil (ALM) und einen passiven Teil (PLM) aufweist, wobei der passive Teil (PLM) des Linearmotors (LM) an der Dämpfermasse (20) befestigt ist.

13. Werkzeugmaschine (1) nach Anspruch 12, wobei der aktive Teil (ALM) des Linearmotors (LM) am Maschinenelement (10) befestigt ist.

14. Werkzeugmaschine (1) nach einem der vorhergehenden Ansprüche, aufweisend einen zweiten Linearmotor (LM2), wobei der zweite Linearmotor (LM2) derart angeordnet ist, dass die Dämpfermasse (20) zwischen den beiden Linearmotoren (LM, LM2) angeordnet ist.

15. Werkzeugmaschine (1) nach Anspruch 14, wobei ein Luftspalt (GAP2) des zweiten Linearmotors (LM2) sich von einem Luftspalt (GAP) des Linearmotors (LM) unterscheidet.
